# EUROPÄISCHE PATENTANMELDUNG

(11) **EP 3 919 847 A1**
(43) Veröffentlichungstag der Anmeldung: **08.12.2021**
(21) Anmeldenummer: 21000149.1
(22) Anmeldetag: 02.06.2021
(51) Int. Cl.: F26B 3/22, F26B 9/08, F26B 11/12, F26B 17/00, F26B 25/00, C02F 11/12, F26B 3/28

(54) **TROCKNUNGSVORRICHTUNG**

(30) Priorität: 02.06.2020 DE 202020002428 U
(71) Anmelder: Obermeier, Klaus, 84568 Pleiskirchen (DE)
(72) Erfinder: Obermeier, Klaus, 84568 Pleiskirchen (DE)
(74) Vertreter: Gössmann, Christoph Tassilo

(57) **Zusammenfassung**

Trocknungsvorrichtung, die ein Hauptgehäuse, das vorzugsweise geschlossen ist, das zumindest eine Beschickungsöffnungen und eine Entsorgungsöffnung, sowie einen Trocknungsboden, der eine Schräge, Steigung aufweist, die ungleich parallel zum Boden des Hauptgehäuses angeordnet ist, eine Wend- und Transportvorichtung und eine Heizvorrichtung aufweist.

## Beschreibung

Die Erfindung betrifft eine Trocknungsvorrichtung und ein Verfahren zur Trocknung unter Verwendung der Trocknungsvorrichtung.

Aus der EP 1 150 083 A1 ist ein Trocknungsverfahren für Klärschlamm bekannt, bei welchem der Klärschlamm mit Trocknungsluft über einem ebenen Trocknungsboden getrocknet wird. Aus der DE 43 31 820 A1 ist ein Verfahren zum Trocknen von Flüssigkeiten aus Klärschlamm bekannt, bei welchem der Klärschlamm auf ebenen Flächen gelagert wird, die mit dem Ziel der Umschichtung und des Transportes des zu behandelnden Klärschlammes bewegt werden.

Es sind aus DE 43 15 321 C2, DE 198 60 181 C1 bereits Trocknungsvorrichtungen bekannt, bei denen der Boden erwärmt wird.

Es ist Aufgabe der Erfindung den Stand der Technik zu verbessern und insbesondere ein Trocknungsverfahren und eine Trocknungsvorrichtung zur Verfügung zu stellen, die wenig Energie verbraucht und eine schnelle schonende Trocknung ermöglicht.

Gegenstand der Erfindung ist eine Trocknungsvorrichtung, die ein Hauptgehäuse, das vorzugsweise geschlossen ist, das zumindest eine Beschickungsöffnung und eine Entsorgungsöffnung, sowie einen Trocknungsboden, der eine Schräge, Steigung aufweist, die ungleich parallel zum Boden des Hauptgehäuses angeordnet ist, eine Wende- und Transportvorichtung und eine Heizvorrichtung aufweist.

Die erfindungsgemäße Trocknungsvorrichtung ist vorzugsweise zum Trocknen von Feuchtgut, insbesondere Gülle und Klärschlamm, Gärreste, aber auch anderen Schüttgütern z.B. Hackschnitzel und Produkte der Ver- und Entsorgung der Lebensmittelindustrie gedacht.

Die erfindungsgemäße Trocknungsvorrichtung weist ein Hauptgehäuse auf, indem die Bestandteile der erfindungsgemäßen Trocknungsvorrichtung angeordnet sind. Dieses Hauptgehäuse kann vorzugsweise stationär oder auch mobil sein.

Ein mobiles Hauptgehäuse kann auf einem Fahrzeug, wie einem Anhänger, Kraftfahrzeug oder Boot angeordnet sein.

Im Hauptgehäuse ist der erfindungsgemäße Trocknungsboden angeordnet, dessen Oberfläche vorzugsweise Stein, Beton oder vorzugsweise ein Metall, wie Aluminium, Kupfer, Edelstahl, Stahl aufweist. Vorzugsweise besteht der erfindungsgemäße Trocknungboden aus vorzugsweise Stein, Beton oder vorzugsweise einem Metall, wie Aluminium, Kupfer, Edelstahl, Stahl.

Der Trocknungsboden ist vorzugsweise, starr, rigide, fest, steif. Der Trocknungsboden ist vorzugsweise kein Förderband, vorzugsweise kein Endlosförderband. Der Trocknungsboden ist vorzugsweise nicht aus einem elastischen Material, wie vorzugsweise Gummi. Vorzugsweise mit der Maßgabe, dass der Trocknungsboden nicht elastisch ist. Vorzugsweise mit der Maßgabe, dass der Trocknungsboden vorzugsweise kein Förderband, vorzugsweise kein Endlosförderband ist.

Der Aufbau des Trocknungsboden kann vorzugsweise eine plane Fläche ohne Seitenbegrenzung sein. Der Aufbau des Trocknungsboden kann vorzugsweise eine plane Fläche mit Seitenbegrenzung sein. Der Trocknungsboden kann vorzugsweise eine plane Fläche mit Seitenbegrenzung sein, die vorzugsweise eine Wanne mit 3 Seitenbegrenzungen bildet, wobei vorzugsweise die Breitseite, Querseite am Ende der Steigung fehlt, um in eine Entsorgungsöffnung zu fallen, die vorzugsweise in einem Austragsbunker endet. Dabei kann die Seitenbegrenzung nur an einer Stelle sein, wie an der Breitseite am Anfang der Steigung. Die Seitenbegrenzung kann auch nur an den Längsseiten oder an den Längsseiten und an der Breitseite am Anfang der Steigung sein. Die Seitenbegrenzungen können auch über das Bodensystem beheizt werden. Die Längsseite sind die vorzugsweise längeren Seite in Richtung der Steigung, entlang der Steigung und die Breitseite, Querseite sind vorzugsweise die kürzeren Seiten, die vorzugsweise am Anfang der Steigung den Abschluß bildet, und verhindert das, das feuchte zu trocknende Gut am Ende der Steigung aus der Wanne rutscht, den der Trocknungsboden vorzugsweise mit seinen drei Seitenbegrenzungen bildet.

Der Trocknungsboden und vorzugsweise die Seitenbegrenzungen können Kanäle aufweisen, in denen Dampf oder eine Flüssigkeit, die Wärme transportiert, wie vorzugsweise Wasser, Öl, Sole fließt und so den Trocknungsboden und vorzugsweise die Seitenbegrenzungen erwärmt. Die Kanäle sind vorzugsweise geschlossen, geschlossene Rohre. Die Temperatur sollte bei vorzugsweise 20°, 20,5°, 21°, 21,5°, 22°, 22,5°, 23°, 23,5°, 24,5°, 24°, 25°, 25,5°, 26°, 26,5°, 27°, 27,5°, 28°, 28,5°, 29°, 29,5°, 30°, 30,5°, 31°, 31,5°, 32°, 32,5°, 33°, 33,5°, 34 °, 34,5°, 35°, 35,5°, 36°, 36,5°, 37°, 37,5°, 38°, 38,5°, 39°, 39,5°, 40°,, 40,5°, 41°, 41,5°, 42°, 42,5°, 43°, 43,5°, 44°, 44,5°, 45°, 45,5°, 46°, 46,5°, 47°, 47,5°, 48°, 48,5°, 49°, 49,5°, 50°, 50,5°, 51°, 51,5°, 52°, 52,5°, 53°, 53,5°, 54 °, 54,5°, 55°, 55,5°, 56°, 56,5°, 57°, 57,5°, 58°, 58,5°, 59°, 59,5°, 60°, 60,5°, 61°, 61,5°, 62°, 62,5°, 63°, 63,5°, 64 °, 64,5°, 65° 65,5°, 66°, 66,5°, 67°, 67,5°, 68°, 68,5°, 69°, 69,5°, 70°, 70,5°, 71°, 71,5°, 72°, 72,5°, 73°, 73,5°, 74 °, 74,5°, 75° 75,5°, 76°, 76,5°, 77°, 77,5°, 78°, 78,5°, 79°, 79,5°,80°, 80,5°, 81°, 81,5°, 82°, 82,5°, 83°, 83,5°, 84 °, 84,5°, 85° 85,5°, 86°, 86,5°, 87°, 87,5°, 88°, 88,5°, 89°, 89,5°, 90° liegen, können aber auch bis 200 ° gehen, wobei Temperaturen von 30° bis 90° bevorzugt sind.

Als Wärmequelle zum Erwärmen der Flüssigkeit dient vorzugsweise eine Heizung, die mit Dampf, Strom, Gas, Hackschnitzel oder Öl betrieben wird; eine Wärmepumpe, Solarkollektoren oder ein Wärmetauscher, der die Abluftwärme oder Abwärme von einem Blockheizkraftwerk nutzt. Als Heizung kann auch vorzugsweise die Abwärme von einem Verbrennungsmotor dienen, insbesondere die Abwärme der Abgase. Diese Wärmequellen können für sich allein oder beliebig miteinander kombiniert werden.

Zusätzlich läßt sich der Wärmeeintrag noch steigern, indem das Hauptgehäuse über dem Trocknungsboden ein für Wärmestrahlung durchlässiges Dach, Abdeckung aufweist, wobei das Hauptgehäuse vorzugsweise vollständig geschlossen oder zumindest fast geschlossen ist. Das für Wärmestrahlung durchlässige Dach, Abdeckung weist bevorzugt Glas, Plexiglas oder ähnliches durchsichtiges Material, das für die Wärmestrahlung des Sonnenlichts durchlässig ist, auf.

Der erfindungsgemäße Trocknungsboden weist eine Schräge, Steigung gegenüber dem Grundboden, auf dem der Trocknungsboden angeordnet ist, das heißt, dass auf dem Trocknungsboden am Ende der Steigung, Schräge aufgebrachtes Feuchtgut und seine Flüssigkeit auf Grund der Schwerkraft herunter rutscht. Das heißt mit der Maßgabe, dass der Trocknungsboden nicht parallel, ungleich parallel zum Grundboden ist, auf dem er steht, wie dem Boden des Hauptgehäuses.

Der Winkel, der Innenwinkel, den der Trocknungsboden, als ein Schenkel, mit dem anderen Schenkel, dem Grundboden, bildet beträgt vorzugsweise 1°, 1,5°, 2°, 2,5°, 3°, 3,5°, 4°, 4,5°, 5°, 5,5°, 6°, 6,5°, 7°, 7,5°, 8°, 8,5°, 9°, 9,5°, 10°, 10,5°, 11°, 11,5°, 12°, 12,5°, 13°, 13,5°, 14°, 14,5°, 15°, 15,5°,16, 16,5°, 17°, 17,5°, 18°, 18,5°, 19°, 19,5°, 20°, 20°, 20,5°, 21°, 21,5°, 22°, 22,5°, 23°, 23,5°, 24,5°, 24°, 25°, 25,5°, 26°, 26,5°, 27°, 27,5°, 28°, 28,5°, 29°, 29,5°, 30°, 30,5°, 31°, 31,5°, 32°, 32,5°, 33°, 33,5°, 34 °, 34,5°, 35°, 35,5°, 36°, 36,5°, 37°, 37,5°, 38°, 38,5°, 39°, 39,5°, 40°,, 40,5°, 41°, 41,5°, 42°, 42,5°, 43°, 43,5°, 44°, 44,5°, 45°, 45,5°, 46°, 46,5°, 47°, 47,5°, 48°, 48,5°, 49°, 49,5°, 50°, 50,5°, 51°, 51,5°, 52°, 52,5°, 53°, 53,5°, 54 °, 54,5°, 55°, 55,5°, 56°, 56,5°, 57°, 57,5°, 58°, 58,5°, 59°, 59,5°, 60°, 60,5°, 61°, 61,5°, 62°, 62,5°, 63°, 63,5°, 64 °, 64,5°, 65° 65,5°, 66°, 66,5°, 67°, 67,5°, 68°, 68,5°, 69°, 69,5°, 70°, 70,5°, 71°, 71,5°, 72°, 72,5°, 73°, 73,5°, 74 °, 74,5°, 75° 75,5°, 76°, 76,5°, 77°, 77,5°, 78°, 78,5°, 79°, 79,5°,80°, 80,5°, 81°, 81,5°, 82°, 82,5°, 83°, 83,5°, 84 °, 84,5°, 85° 85,5°, 86°, 86,5°, 87°, 87,5°, 88°, 88,5°, 89°.
Eine Steigung von 5° bis 70° sind bevorzugt.

Die Schräge, Steigung kann vorzugsweise in der Schräge, Steigung im Raster verstellbar sein. Vorzugsweise geschieht das über ein Seil, eine Kette eine Spindel, Zahnstange, einen Abstandshalter, der vorzugsweise längsverstellbar ist, vorzugsweise indem er zwei Hülsen bildet, die jeweils ein korrespondierendes Gewinde aufweisen, das sie durch Drehung in ihrer Länge zu einander verstellbar macht, oder zwei Rohre die ineinander verschiebbar sind und Bohrungen aufweisen, über die die Rohre mit Schraube und Mutter, Bolzen oder Splinten feststellbar sind oder die Rohre sind teleskopartig verschiebbar und weisen eine Klemmfeststellung auf, wobei auch verschieden lange Abstandhalter einsetzbar und befestigbar sind, z.B. durch eine Schraube, Bolzen oder Splint befestigbar sind, bevorzugt ist ein Abstandhalter, der zwei ineinander teleskopartig verschiebbar Rohre aufweist, die hydraulisch stufenlos verstellbare sind.

Der Trocknungsboden weist an seiner Unterseite vorzugsweise eine Isolierung auf. Die Isolierung kann vorzugsweise ein Dämmaterial wie Polystyrol, Polyurethan, Neopor AcrylnitrilButadien-Styrol (ABS), Polyamide (PA), Polylactat (PLA), Polymethylmethacrylat (PMMA), Polycarbonat (PC), Polyethylenterephthalat (PET), Polyethylen (PE), Polyetheretherketon (PEEK), Polypropylen, Polyvinylchlorid; Holzfaserwerkstoffe, wie Holzwolle, Kork; pflanzliche oder tierische Faser wie z.B. Hanf, Flachs, Holzfaser, Seegras, Holzwolle, Kokosfaser, Schilf, Baumwolle, Schafwolle, Cellulosefasern, Textilfasern; Kunststoffasern, wie Polyamid- oder Polyesterfasern; anorganische Wärmedämmstoffe, wie Mineralfasern, wie Glaswolle, Mineralwolle, Steinwolle, Basaltwolle, Schlackenwolle, keramische Fasern, Silicafasern, Schaumglas, (gepresste) Mineralfaser, Kieselsäure, vorzugsweise hydrophobe Kieselsäure, bevorzugt pyrogene Kieselsäure, besonders bevorzugt hydrophobe pyrogene Kieselsäure, Bimsstein, Perlite, Vermiculite, Metalloxide, wie vorzugsweise Metalloxide, wie Aluminiumoxid, Titanoxid, Eisenoxid, Silikate, wie Calciumsilikat, Magnesiumsilikat, Magnesium-Eisensilikat, aufweisen. Weitere Dämmstoffe sind Blähton, Calciumsilicat, Schaumglas.

Die Wende- und Transportvorichtung weist vorzugsweise den Aufbau eines Kratzförderers oder Förderbands auf, der zwei Endlosketten mit dazwischen in regelmäßigen Abständen angeordneten Mitnehmerleisten aufweist. Dieser Kratzförderer ist vorzugsweise in einer endlosen Schleife über dem Trocknungsboden angeordnet, so dass die Mitnehmerleisten den Trocknungsboden berühren oder ohne den Trocknungsboden zu berühren, knapp über dem Trocknungsboden mit vorzugsweise 1 mm, 2 mm, 3 mm, 4 mm, 5 mm, 6 mm, 7 mm, 8 mm, 9 mm 10 mm Abstand umlaufen. Die Geschwindigkeit ist stufenlos verstellbar, um die Trocknungszeit bzw. die Feuchtigkeit von dem Trocknungsgut zu steuern, um den optimalen Trocknungsgehalt zu erreichen.

Die Wend- und Transportvorichtung kann auch in einer Endlosschleife um den Trocknungsboden herum laufen, so dass der Trocknungsboden von der Wend- und Transportvorichtung umschlossen ist.

Die Beschickungsöffnung ist vorzugsweise durch ein Beschickungsrohr gebildet, dass sich am Anfang der Steigung des Trocknungboden befindet und das Feuchtgut anliefert, das dann durch die Mitnehmerleisten der Wend- und Transportvorichtung die Steigung des Trocknungsbodens heraufgezogen wird, so dass die Feststoffteile von den Mitnehmerleisten der Wend- und Transportvorichtung mitgenommen werden und am Ende der Steigung in eine Entsorgungsöffnung fallen, die vorzugsweise in einem Austragsbunker endet. Die Flüssiganteile des Feuchtgutes verbleiben unten an der Steigung des Trocknungsbodens.

Der Boden des Hauptgehäuses dient als Sammelstelle für die Flüssiganteile des Feuchtgutes und kann in einen Sammelbehälter abgepumpt oder durch eine Öffnung im Boden des Hauptgehäuses entsorgt werden, indem es von dort in einen Sammelbehälter fließt, der dann die Flüssiganteile einer sachgerechten Entsorgung zuführt.

Die Trocknungsvorrichtung weist einen Austragungsbunker auf, der die Feststoffanteile des Feuchtgutes aufnimmt, wenn sie vom Trocknungsboden am Ende der Steigung herunterfallen.

Die Abluft führt durch einen Abluftkanal, der vorzugsweise im oberen Teil des Hauptgehäuses angeordnet ist und vorzugsweise einen Wärmetauscher aufweist, um die Wärme der Abluft für den Trocknungsboden wieder zu gewinnen und durchläuft dann vorzugsweise einen Luftwäscher, der die schädlichen festen und gasförmigen Bestandteile der Abluft absondert, ausscheidet.

Ein weitere Gegenstand der Erfindung ist ein Verfahren zur Trocknung unter Verwendung der erfindungsgemäßen Trocknungsvorrichtung, wobei der Trocknungsboden schräg, mit einer Steigung, angeordnet wird und dass der Trocknungsboden erwärmt wird und mit zu trocknendem Gut beschickt wird. Das Trocknungsgut wird mit einer Transport- und Wendevorrichtung bearbeitet, behandelt, gefördert.

Die Beschickungsöffnung ist vorzugsweise durch ein Beschickungsrohr gebildet, dass sich am Anfang der Steigung des Trocknungboden befindet und das Feuchtgut anliefert, das dann durch die Mitnehmerleisten der Wend- und Transportvorichtung die Steigung des Trocknungsbodens heraufgezogen wird, so dass die Feststoffteile von den Mitnehmerleisten der Wend- und Transportvorichtung mitgenommen werden und am Ende der Steigung in eine Entsorgungsöffnung fallen, die vorzugsweise in einem Austragsbunker endet. Die Flüssiganteile des Feuchtgutes verbleiben unten an der Steigung des Trocknungsbodens.

Beim erfindungsgemäßen Verfahren zur Trocknung wird die Abluft des Trocknungsgutes vorzugsweise mit einem Luftwäscher behandelt.
Der Trocknungsboden wird erwärmt. Die Temperatur sollte bei vorzugsweise 20°, 20,5°, 21°, 21,5°, 22°, 22,5°, 23°, 23,5°, 24,5°, 24°, 25°, 25,5°, 26°, 26,5°, 27°, 27,5°, 28°, 28,5°, 29°, 29,5°, 30°, 30,5°, 31°, 31,5°, 32°, 32,5°, 33°, 33,5°, 34 °, 34,5°, 35°, 35,5°, 36°, 36,5°, 37°, 37,5°, 38°, 38,5°, 39°, 39,5°, 40°,, 40,5°, 41°, 41,5°, 42°, 42,5°, 43°, 43,5°, 44°, 44,5°, 45°, 45,5°, 46°, 46,5°, 47°, 47,5°, 48°, 48,5°, 49°, 49,5°, 50°, 50,5°, 51°, 51,5°, 52°, 52,5°, 53°, 53,5°, 54 °, 54,5°, 55°, 55,5°, 56°, 56,5°, 57°, 57,5°, 58°, 58,5°, 59°, 59,5°, 60°, 60,5°, 61°, 61,5°, 62°, 62,5°, 63°, 63,5°, 64 °, 64,5°, 65° 65,5°, 66°, 66,5°, 67°, 67,5°, 68°, 68,5°, 69°, 69,5°, 70°, 70,5°, 71°, 71,5°, 72°, 72,5°, 73°, 73,5°, 74 °, 74,5°, 75° 75,5°, 76°, 76,5°, 77°, 77,5°, 78°, 78,5°, 79°, 79,5°,80°, 80,5°, 81°, 81,5°, 82°, 82,5°, 83°, 83,5°, 84 °, 84,5°, 85° 85,5°, 86°, 86,5°, 87°, 87,5°, 88°, 88,5°, 89°, 89,5°, 90° liegen, können aber auch bis 200° gehen, wobei Temperaturen von 30° bis 90° bevorzugt sind.

Der Trocknungsboden wird auf einen Winkel, den Innenwinkel, den der Trocknungsboden, als ein Schenkel, mit dem anderen Schenkel, dem Grundboden, bildet, auf einen Winkel von vorzugsweise 1°, 1,5°, 2°, 2,5°, 3°, 3,5°, 4°, 4,5°, 5°, 5,5°, 6°, 6,5°, 7°, 7,5°, 8°, 8,5°, 9°, 9,5°, 10°, 10,5°, 11°, 11,5°, 12°, 12,5°, 13°, 13,5°, 14°, 14,5°, 15°, 15,5°,16, 16,5°, 17°, 17,5°, 18°, 18,5°, 19°, 19,5°, 20°, 20°, 20,5°, 21°, 21,5°, 22°, 22,5°, 23°, 23,5°, 24,5°, 24°, 25°, 25,5°, 26°, 26,5°, 27°, 27,5°, 28°, 28,5°, 29°, 29,5°, 30°, 30,5°, 31°, 31,5°, 32°, 32,5°, 33°, 33,5°, 34 °, 34,5°, 35°, 35,5°, 36°, 36,5°, 37°, 37,5°, 38°, 38,5°, 39°, 39,5°, 40°,, 40,5°, 41°, 41,5°, 42°, 42,5°, 43°, 43,5°, 44°, 44,5°, 45°, 45,5°, 46°, 46,5°, 47°, 47,5°, 48°, 48,5°, 49°, 49,5°, 50°, 50,5°, 51°, 51,5°, 52°, 52,5°, 53°, 53,5°, 54 °, 54,5°, 55°, 55,5°, 56°, 56,5°, 57°, 57,5°, 58°, 58,5°, 59°, 59,5°, 60°, 60,5°, 61°, 61,5°, 62°, 62,5°, 63°, 63,5°, 64 °, 64,5°, 65° 65,5°, 66°, 66,5°, 67°, 67,5°, 68°, 68,5°, 69°, 69,5°, 70°, 70,5°, 71°, 71,5°, 72°, 72,5°, 73°, 73,5°, 74 °, 74,5°, 75° 75,5°, 76°, 76,5°, 77°, 77,5°, 78°, 78,5°, 79°, 79,5°,80°, 80,5°, 81°, 81,5°, 82°, 82,5°, 83°, 83,5°, 84 °, 84,5°, 85° 85,5°, 86°, 86,5°, 87°, 87,5°, 88°, 88,5°, 89° eingestellt.
Der Trocknungsboden wird bevorzugt auf eine Steigung von 5° bis 70° eingestellt.

### Figur 1

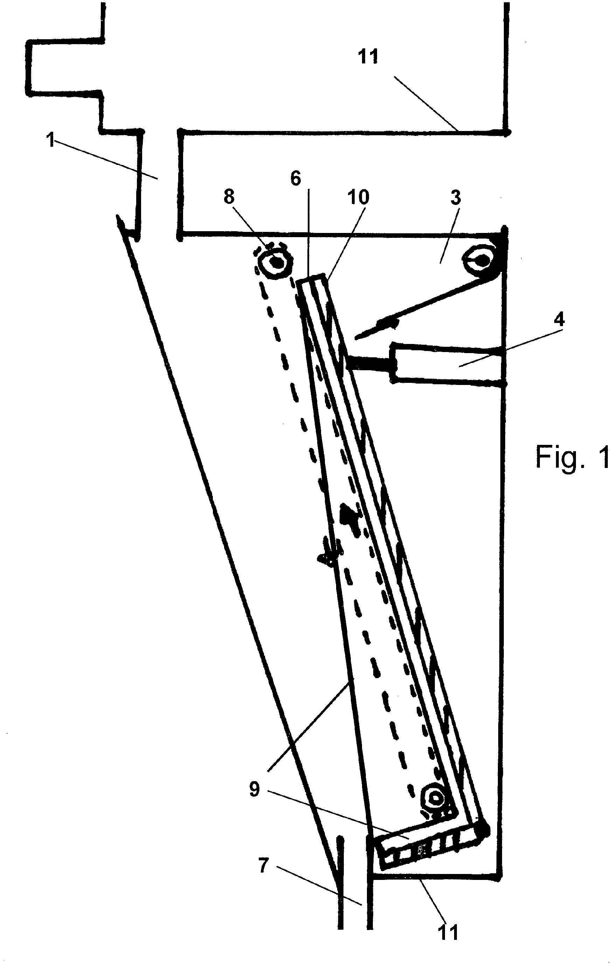

Die Figur 1 zeigt einen Längsschnitt durch die erfindungsgemäße Trocknungsvorrichtung und ist zur Ansicht aus dem Hochformat um 90° im Uhrzeigersinn zu drehen, so dass die Figur 1 im Querformat zur Ansicht liegt. Beim erfindungsgemäßen Verfahren wird das Feuchtgut, insbesondere Gülle, Gärreste, Hackschnitzel und Klärschlamm, aber auch andere Schüttgüter z.B. Lebensmittel, Produkte aus der Ver- und Entsorgung durch das Beschickungsrohr (7) auf den Trocknungsboden (6) ausgebreitet. Der Trocknungsboden weist Seitenbegrenzungen (9) an der Breitseite und den Längsseiten am Anfang der Steigung auf, wobei die seitliche Seitenbegrenzung (9) hier aus einem durchsichtigen, transparenten Material aufgebaut ist, um durchsichtig zu sein, um die dahinter liegende Wende-, und Transportvorrichtung (8) sichtbar zu lassen. Der Trocknungsboden (6) weist an seiner Unterseite eine Isolierung (10) auf. Durch die Steigung des Trocknungsboden wird das Flüssige von den festen Bestandteilen getrennt. Die Wende-, und Transportvorrichtung (8) ist zuständig dafür, dass das Feuchtgut einer Umwälzung unterliegt und die trocknen bzw. festen Bestandteile nach oben auf den Trocknungsboden gezogen werden, wodurch diese außerhalb des Flüssigkeitsstandes sind. Durch die Höhenverstellung (4) kann der Trocknungsboden variabel angepasst werden. Das Trockengut fällt in einen Austragsbunker (3). Durch die lichtdurchlässige Glasabdeckung (5) kann zusätzlich zur Trocknung die Sonnenenergie genutzt werden. Die Abluft (2) wird anschließend durch einen Luftwäscher (1) gereinigt. Dies alles ist in einem Hauptgehäuse (11) angeordnet oder mit einander verbunden.

## Patentansprüche

1. Trocknungsvorrichtung, die ein Hauptgehäuse, das vorzugsweise geschlossen ist, das zumindest eine Beschickungsöffnungen und eine Entsorgungsöffnung, sowie einen Trocknungsboden, der eine Schräge, Steigung aufweist, die ungleich parallel zum Boden des Hauptgehäuses angeordnet ist, eine Wend- und Transportvorichtung und eine Heizvorrichtung aufweist.

2. Trocknungsvorrichtung nach Anspruch 1 **dadurch gekennzeichnet, dass** die Trocknungsvorrichtung ein für Wärmestrahlung durchlässiges Dach, Abdeckung aufweist.

3. Trocknungsvorrichtung nach Anspruch 1 oder 2, **dadurch gekennzeichnet, dass** die Heizvorrichtung eine Trocknungsbodenheizung ist.

4. Trocknungsvorrichtung nach einem oder mehreren der Ansprüche 1 bis 3, **dadurch gekennzeichnet, dass** der Trocknungsboden in der Schräge, Steigung verstellbar ist.

5. Trocknungsvorrichtung nach einem oder mehreren der Ansprüche 1 bis 4, **dadurch gekennzeichnet, dass** der Trocknungsboden einen Isolierung aufweist.

6. Trocknungsvorrichtung nach einem oder mehreren der Ansprüche 1 bis 5, **dadurch gekennzeichnet, dass** die Trocknungsvorrichtung einen Austragungsbunker aufweist.

7. Trocknungsvorrichtung nach einem oder mehreren der Ansprüche 1 bis 6, **dadurch gekennzeichnet, dass** die Trocknungsvorrichtung einen Abluftkanal aufweist, der vorzugsweise einen Luftwäscher aufweist.

8. Verfahren zur Trocknung unter Verwendung der Trocknungsvorrichtung nach einem oder mehreren der Ansprüche 1 bis 7, **dadurch gekennzeichnet, dass** der Trocknungsboden schräg, mit einer Steigung, angeordnet wird und dass der Trrocknungsboden erwärmt wird und mit zu trocknendem Gut beschickt wird.

9. Verfahren zur Trocknung nach Anspruch 8, **dadurch gekennzeichnet, dass** das Trocknungsgut mit einer Transport- und Wendevorrichtung bearbeitet, behandelt, gefördert wird.

10. Verfahren zur Trocknung nach Anspruch 9, **dadurch gekennzeichnet, dass** die Abluft des Trocknungsgutes mit einem Luftwäscher behandelt wird.
